# EUROPEAN PATENT APPLICATION

(11) **EP 1 543 757 A1**
(43) Date of publication of application: **22.06.2005**
(21) Application number: 04254208.4
(22) Date of filing: 14.07.2004
(51) Int. Cl.: A47L 9/24, F16L 27/08

(54) **Extension pipe having a joint for vacuum cleaner**

(30) Priority: 15.12.2003 KR 2003091263
(71) Applicant: Samsung Gwangju Electronics Co., Ltd., Gwangju-city (KR)
(72) Inventor: Park, Joung-Soo 104-504, Doosan Apartment, Jeonju-Si, Jeonrabuk-Do (KR)
(74) Representative: Wilson Gunn M'Caw

(57) **Abstract**

An extension pipe with a joint for a vacuum cleaner which forms a sealed channel between a cleaner body and a suction brush and includes a part bendable by a user's selection. The extension pipe includes a first extension pipe (110), a second extension pipe (120) pivotably connected to the first extension pipe, at least one separation preventing cap (130) penetrating through the first and the second pipes (110,120) from the outside of the first extension pipe (110), and a locking unit (140) hingedly connected to the first extension pipe (110). The locking unit (140) hooks the second extension pipe (120) and selectively locks the pivotal movements of the first and the second extension pipes (110,120). Further, the locking unit (140) releases the locking of the second extension pipe (120) so that the first and the second extension pipes (110,120) can be bent.

## Description

### REFERENCE TO RELATED APPLICATION

This application claims priority to copending Korean Patent Application No. 2003-91263 filed on December 15, 2003, in the Korean Intellectual Property Office, the entire contents of which are incorporated herein by reference.

### CROSS-REFERENCE TO RELATED APPLICATIONS

This application is related to the copending applications entitled, "Bendable Nozzle For Vacuum Cleaner," (Korean Application 10-2003-72873, filed October 20, 2003), and "Bendable Extension Pipe Having Joint For Vacuum Cleaner,' (Korean Application 2003-72874), filed October 20, 2003, which disclosures are commonly owned by the same assignee as the present application and are entirely incorporated herein by reference.

### FIELD OF THE INVENTION

The present invention relates to a vacuum cleaner, and more particularly, to an extension pipe for a vacuum cleaner which has a bendable connection part to enable cleaning on the spaces under furniture such as a bed and a sofa with convenience.

### BACKGROUND OF THE INVENTION

Generally, a vacuum cleaner suctions in dirt and dust from a cleaning surface together with ambient air using a vacuum suction force generated by a vacuum suction motor provided in a cleaner body. The vacuum cleaner has a channel connected between the cleaner body and a suction brush in a sealed state. The channel may take various formations according to the kind of the vacuum cleaner, and in general, a canister type vacuum cleaner includes a flexible hose for connecting the cleaner body with a handle and an extension pipe for connecting the handle and the suction brush. The extension pipe is expandable, contractable, and adjustable in length. A plurality of extension pipes are provided to be assembled and disassembled for operation with the vacuum cleaner.

However, the suction brush connected to the conventional extension pipe has a disadvantage in that, in order to clean spaces under furniture such as a bed and a sofa, a user has to adopt a low posture to bring the suction brush into close contact with the cleaning surface because the angle between the extension pipe and the suction brush is usually unadjustable. Also, even if the angle between the extension pipe and the suction brush is adjustable, the user still has to bend his/her back to push the suction brush further into the spaces under the furniture.

Thus, a need exists in the industry to address the aforementioned deficiencies and inadequacies.

### SUMMARY OF THE INVENTION

The present invention was developed in order to solve the problems mentioned above. An object of the present invention is to provide an extension pipe with a joint for a vacuum cleaner which enables bending of the extension pipe through simple button manipulation and without requiring a user to bend his/her back, and also provides a convenient cleaning performance.

The above aspect of the present invention is achieved by providing an extension pipe with a joint for a vacuum cleaner which forms a sealed channel between a cleaner body and a suction brush and has a part bendable by a user's selection. The extension pipe includes a first extension pipe, a second extension pipe pivotably connected to the first extension pipe, at least one separation preventing cap penetrating through the first and the second pipes from the outside of the first extension pipe, and a locking unit hingedly connected to the first extension pipe for hooking the second extension pipe and selectively locking the pivotal movements of the first and the second extension pipes. The locking unit releases the locking of the second extension pipe so that the first and the second extension pipes can be bent.

The first extension pipe may include a tubular body and a cylindrical joint with an open part, the second extension pipe pivotably connected to the open part, and a locker receiver in which the locking unit is received.

The cylindrical joint may include a first and a second insertion holes through which the separation preventing caps penetrate for the connection with the cylindrical joint. The first insertion hole may include a plurality of slots defined in positions corresponding to first insertion protrusions protruding from the separation preventing cap. A connecting line from the plurality of slots substantially forms a circular line. The second insertion hole may include a penetrating hole formed in positions corresponding to second insertion protrusions protruding from the separation preventing caps. The first and the second insertion holes may be formed in receiving recesses formed in opposite sides of the cylindrical joint with a predetermined depth corresponding to the thickness of the separation preventing cap.

The locking unit may comprise a locking lever hinged on the first extension pipe and at least one hook protruding from an end of the locking lever. The second extension pipe may include a locking recess formed in a position corresponding to the hook, and a locking projection for preventing reverse pivotal movement of the second extension pipe.

Other systems, methods, features, and advantages of the present invention will be or become apparent to one with skill in the art upon examination of the following drawings and detailed description. It is intended that all such additional systems, methods, features, and advantages be included within this description, be within the scope of the present invention, and be protected by the accompanying claims.

### BRIEF DESCRIPTION OF THE DRAWING FIGURES

Many aspects of the invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.

FIG. 1 is a perspective view showing an extension pipe with a joint, for a vacuum cleaner according to an embodiment of the present invention.

FIG. 2 is an exploded perspective view of FIG. 1.

FIG. 3 is a cross-section view of FIG. 1 across line III-III in which the first and the second extension pipes according to the embodiment of the present invention are locked and held in a straight line.

FIG. 4 is a cross section view of FIG. 1 across line III-III in which the first and the second extension pipes according to the embodiment of the present invention are released from locked state and held in a bent condition.

FIG. 5 is a cross section view of FIG. 2 across line V-V.

### DETAILED DESCRIPTION OF THE PREFERRED EMBODIMENTS

An embodiment of the present invention will be described below in detail with reference to the accompanying drawing.

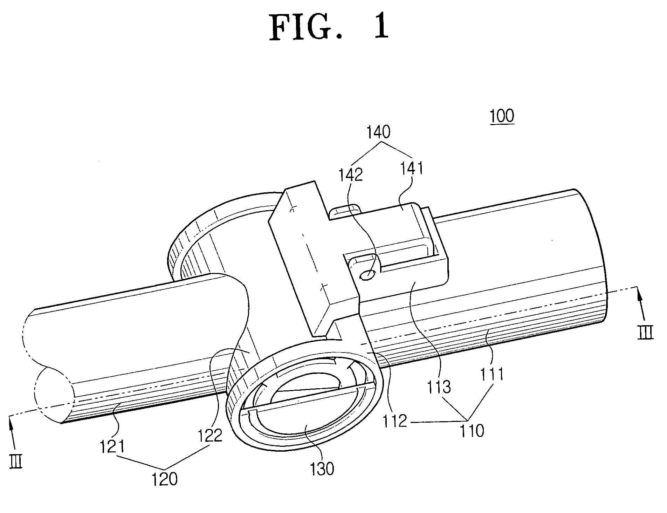

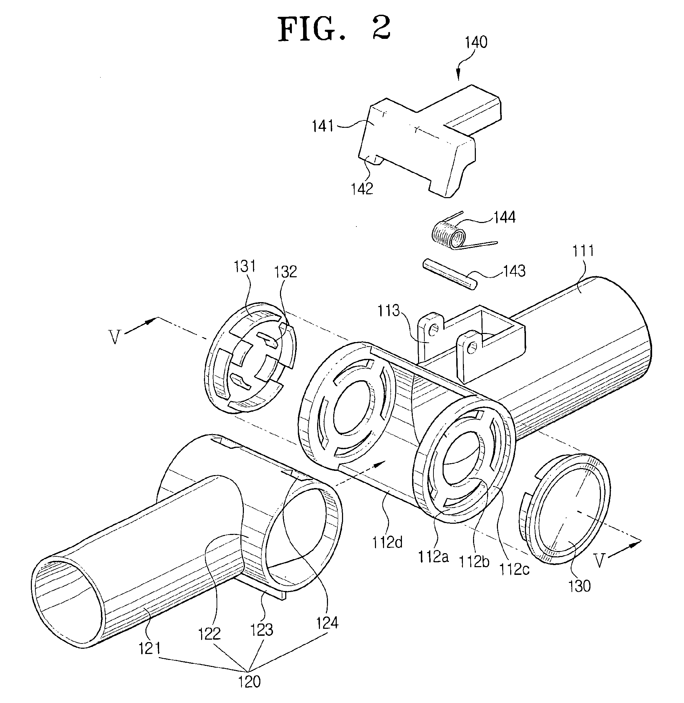

FIGS. 1 and 2 are a perspective view and an exploded perspective view, respectively, for showing an extension pipe with a joint for a vacuum cleaner according to a preferred embodiment of the present invention. The extension pipe includes a first extension pipe 110 connected to a cleaner body (not shown), and a second extension pipe 120 bendably connected to the first extension pipe 110 and also connected to a suction brush (not shown) through which dirt is drawn in from a cleaning surface. The first and the second extension pipes 110 and 120 are pivotably connected to each other through a separation preventing cap 130. The pivotal movement of the second extension pipe 120 with respect to the first extension pipe 110 is adjusted by a locking unit 140 hingedly connected to the first extension pipe 110.

The first extension pipe 110 includes a first extension pipe body 111, a cylindrical joint 112 connected to the second extension pipe 120, and a locking lever receiver 113 in which the locking unit 140 is received. The first extension pipe body 111 has one side connected to the cleaner body (not shown) and the other side connected to the cylindrical joint 112. The first extension pipe body 111 has a substantially tubular shape.

As shown in FIG. 2, the cylindrical joint 112 has one side open to house therein a joint part 122 formed at the second extension pipe 120. The cylindrical joint 112 includes receiving recesses 112c formed in opposite sides thereof. The separation preventing caps 130 are engaged with the receiving recesses 112c so that the separation prevention caps 130 can penetrate through the first and the second extension pipes 110, 120. Each receiving recess 112c includes first insertion holes 112a and a second insertion hole 112b defined therein, for allowing the separation preventing cap 130 to penetrate through the first and the second extension pipes 110 and 120.

The second extension pipe 120 has one side connected to the suction brush (not shown), through which dirt is suctioned in, and the other side of the second extension pipe 120 is disposed to the joint part 122 to be connected to the cylindrical joint 112. The joint part 122 is shaped in a cylinder with a size corresponding to an inner circumference of the cylindrical joint 112, and pivotably connected to the cylindrical joint 112 through the separation preventing caps 130.

A locking projection 123 is formed on an outer circumference of the joint part 122. The locking projection 123 is supported by the cylindrical joint 112 when the first and the second extension pipes 110 and 120 are held in a straight line. A locking recess 124 is formed in an outer circumference of the joint part 122 opposite to the locking projection 123, into which the locking unit 140 is hooked.

The separation preventing caps 130 are engaged with the opposite sides of the cylindrical joint 112 to allow the first and the second extension pipes 110, 120 to pivotably connect to each other. For engagement with the cylindrical joint 112, the separation preventing cap 130 includes first and second insertion protrusions 131, 132 formed on a surface thereof connected to the cylindrical joint 112 as shown in FIG. 2. When engaged, the first insertion protrusions 131 are positioned inwardly apart from the most outer line of the separation separating cap 130 by a predetermined distance. As shown in FIG. 2, the first insertion protrusions 131 are each symmetrical to its opposing insertion protrusion. A connecting line of the plurality of first insertion protrusions 131 forms a imaginary circular line to facilitate the pivotal movement of the second extension pipe 120 with respect to the first extension pipe 110. Preferably, a distance between the opposite first insertion protrusions 131 corresponds to the diameter of the joint part 122 for smooth pivoting of the second extension pipes 120.

The second insertion protrusions 132 protrude from the separation preventing cap 130 and are positioned inwardly apart from the first insertion protrusions 131 by a predetermined distance. Like the first insertion protrusions 131, the second insertion protrusions 132 are each symmetrical to its opposing second insertion protrusion. One difference of the second insertion protrusions 132 is that they are positioned corresponding to the spaces between the respective first insertion protrusions 132. As shown in FIG. 2, the first insertion protrusions 131 and the second insertion protrusions 132 are formed in an staggered pattern.

The locking unit 140 includes a locking lever 141, a resilient member 144, and a hinge pin 143. The locking lever 141 is hinged on the locking lever receiver 113, which is integrally formed with the first extension pipe body 111, by the hinge pin 143 with the resilient member 144 interposed therebetween. A hook 142 is formed at an end of the locking lever 141. The hook 142 is hooked into the locking recess 124 so that the second extension pipe 120 can be held in a straight line with respect to the first extension pipe 110. More than one hook 142 may be provided at the end of the locking lever 141. In this embodiment, two hooks 142 are formed at the end of the locking lever 141 opposite to each other.

Hereinbelow, the operation of the extension pipe having the joint for a vacuum cleaner will be described in detail.

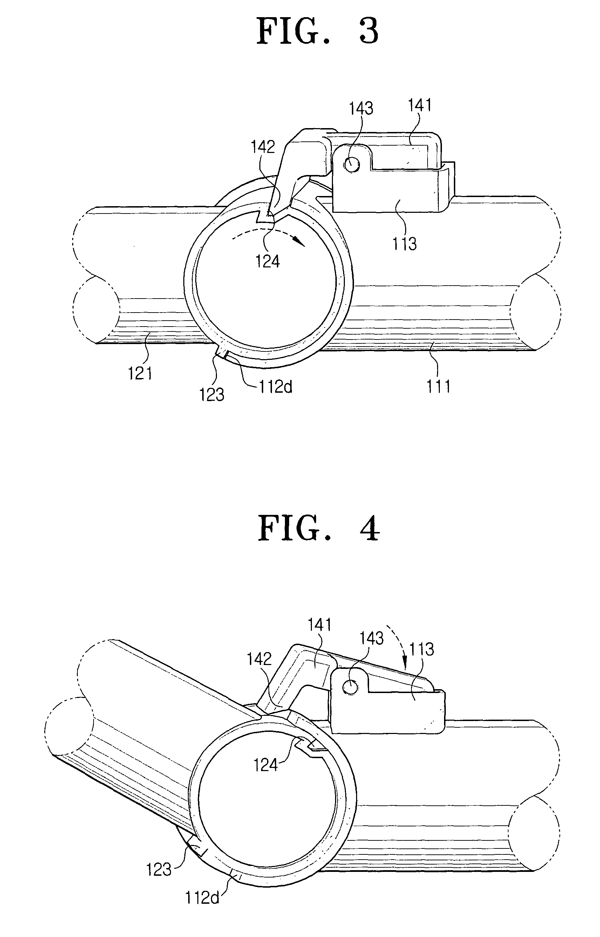

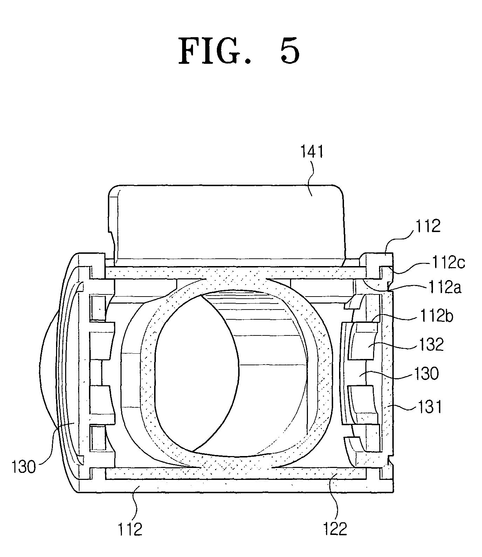

FIGS. 3 and 4 are partial cross-sectional views illustrating the extension pipe with the joint for a vacuum cleaner according to the embodiment of the present invention.

In conventional operational cleaning of a plane surface such as floor, the first and the second extensions pipes 110 and 120 are held in the straight line as shown in FIG. 3. More specifically, the hooks 142 protruding from the end of the locking lever 141 are hooked into the locking recesses 124 defined in portions of the second extension pipe 120 corresponding to the hooks 142 so that the first and the second extension pipes 110, 120 are held in the straight line. At an opposite side of the locking recesses 124 the locking projection 123 is formed for preventing the second extension pipe 120 from bending to an undesired direction. The locking projection 123 is supported on a surface of the open part 112d of the cylindrical joint 112 (see FIGS. 2-4). Accordingly, even when the locking lever 141 moves out of the locking recesses 124 and is released from the locked state, the second extension pipe body 121 is allowed to pivot only in the arrowed direction of FIG. 3.

In cleaning the spaces under furniture such as a bed, the user presses the locking lever 141 in the 'arrowed' direction of FIG. 4. Accordingly, the hooks 142 move out of the locking recesses 124, thus enabling bending of the second extension pipes 121.

In order to recover the second extension pipe body 121 connected to the suction brush (not shown) to the straightened state with respect to the first extension pipe body 111, the user grips and lifts the first extension pipe body 111. By the weight of the suction brush connected to the second extension pipe body 121 and to the second extension pipe body 121, the second extension pipe body 121 reversely pivots to the bending direction until the hooks 142 are received in the locking recesses 124. Because the locking lever 141 is connected to the locking lever receiver 113 with the intervention of the resilient member 144 therebetween, the hooks 142, integrally formed with the locking lever 141, are automatically hooked into the locking recesses 124 by the resilient recovering force of the resilient member 144. Accordingly, it is possible for the user to recover the first and the second extension pipes 110, 120 to the straightened condition by simply lifting the first extension pipe body 111 without a separate button manipulation.

As shown in FIG. 5, the joint part 122 is received in the cylindrical joint 112 and includes an open part to maintain a flow path in a sealed state when the first and the second extension pipes 110 and 120 are held in the bent condition. Also, since the separation preventing caps 130 are closely engaged with the first and the second insertion holes 112a, 112b provided in the receiving recesses 112c formed in the opposite sides of the cylindrical joint 112 with a predetermined depth, the separation preventing caps 130 are partially released from engagement with the cylindrical joint 112.

As described above, since the first and the second extension pipe 110, 120 can be bent by simply pulling out an operation handle and a release handle, the user easily cleans the spaces under the bed or sofa without bending his/her back or adopting a low posture, and therefore, the user's convenience is improved.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. An extension pipe with a joint for a vacuum cleaner, which forms a sealed channel between a cleaner body and a suction brush and includes a part bendable by a user's selection, the extension pipe comprising:
a first extension pipe;
a second extension pipe pivotably connected to the first extension pipe;
at least one separation preventing cap penetrating through the first and the second pipes from the outside of the first extension pipe; and
a locking unit hingedly connected to the first extension pipe, for hooking the second extension pipe and selectively locking the pivotal movements of the first and the second extension pipes,
wherein the locking unit releases the locking of the second extension pipe so that the first and the second extension pipes can be bent.

2. The extension pipe as claimed in claim 1, wherein the first extension pipe comprises:
a tubular body;
a cylindrical joint with an open part, the second extension pipe pivotably connected to the opened part; and
a locker receiver in which the locking unit is received.

3. The extension pipe as claims in claim 2, wherein the cylindrical joint comprises a first and a second insertion holes through which the separation preventing caps penetrate for the connection with the cylindrical joint.

4. The extension pipe as claimed in claim 3, wherein the first insertion hole comprises a plurality of slots defined in corresponding positions to first insertion protrusions protruding from the separation preventing cap.

5. The extension pipe as claimed in claim 4, wherein a connecting line of the plurality of slots forms substantially a circular line.

6. The extension pipe as claimed in claim 3, 4 or 5, wherein the second insertion hole comprises a penetrating hole formed in corresponding positions to second insertion protrusions protruding from the separation preventing cap.

7. The extension pipe as claimed in claim 3, 4, 5 or 6, wherein the first and the second insertion holes are formed in receiving recesses formed in opposite sides of the cylindrical joint with a predetermined depth corresponding to a thickness of the separation preventing caps.

8. The extension pipe as claimed in any preceding claim, wherein the locking unit comprises:
a locking lever hinged on the first extension pipe; and
at least one hook protruding from an end of the locking lever.

9. The extension pipe as claimed in claim 8, wherein the second extension pipe comprises:
a locking recess formed in a corresponding position to the hook; and
a locking projection for preventing reverse pivotal movement of the second extension pipe.
